# EUROPEAN PATENT APPLICATION

(11) **EP 4 657 532 A2**
(43) Date of publication of application: **03.12.2025**
(21) Application number: 25204775.8
(22) Date of filing: 26.09.2023
(51) Int. Cl.: H01M 4/02

(54) **NEGATIVE ELECTRODE AND SECONDARY BATTERY**

(30) Priority: 30.09.2022 KR 20220125438
(62) Divisional of application: 23199867.5
(71) Applicant: LG Energy Solution, Ltd., Seoul 07335 (KR)
(72) Inventor: PIAO, Lilin, 34122 DAEJEON (KR); LEE, Gyeongseop, 34122 DAEJEON (KR); KIM, Minsoo, 34122 DAEJEON (KR); KIM, Shulkee, 34122 DAEJEON (KR); PARK, Kyutae, 34122 DAEJEON (KR); BAEK, Sora, 34122 DAEJEON (KR); YOO, Kwang Ho, 34122 DAEJEON (KR); JUNG, Wonhee, 34122 DAEJEON (KR)
(74) Representative: Plasseraud IP

(57) **Abstract**

Disclosed (or Provided) are a negative electrode for a secondary battery, including: a current collector; a first negative electrode active material layer provided on the current collector; and a second negative electrode active material layer provided on the first negative electrode active material layer, in which the first and second negative electrode active material layers include a silicon-based active material and natural graphite, the natural graphite has an average particle diameter (D50) of 10 µm or less, and the OI (004/110) of the first and second negative electrode active material layers is 8 or less, and a secondary battery including the same.

## Description

### TECHNICAL FIELD

The present invention relates to a negative electrode for a secondary battery and a secondary battery including the same.

### BACKGROUND ART

Secondary batteries are universally applied not only to portable devices but also to electric vehicles (EVs) and hybrid electric vehicles (HEVs), which are driven by electric driving sources.

Since such a secondary battery has not only the primary advantage of being able to dramatically reduce the use of fossil fuels, but also the advantage of not generating any by-products caused by the use of energy, the secondary battery is attracting attention as a new energy source that is environmentally friendly and improves energy efficiency.

In general, a secondary battery includes a positive electrode, a negative electrode, a separator interposed between the positive electrode and the negative electrode, and an electrolyte. Further, an electrode such as a positive electrode and a negative electrode may comprise an electrode active material layer provided on a current collector.

As the use of secondary batteries increases, different battery performance characteristics are required. Although attempts have been made to add additives to the active material layer in order to improve battery performance or the sustainability thereof, some type of performance of the battery may be improved depending on the type of additive, but some other type of performance may rather deteriorate. Therefore, there is a need for research on the selection or combination of materials included in an electrode capable of maintaining or improving the performance of a secondary battery while maintaining or improving the sustainability thereof.

### BRIEF DESCRIPTION OF THE INVENTION

The present invention refers to a negative electrode for a secondary battery with improved rapid charging performance and a secondary battery including the same.

An embodiment of the present invention provides a negative electrode for a secondary battery, comprising:
a current collector;
a first negative electrode active material layer provided on the current collector; and
a second negative electrode active material layer provided on the first negative electrode active material layer,
in which the first and second negative electrode active material layers include a silicon-based active material and natural graphite, the natural graphite has an average particle diameter (D50) of 10 µm or less,
the OI (004/110) of the first and second negative electrode active material layers is 8 or less.

In one embodiment, the thickness of the second negative electrode active material layer is 20% to 35% relative to the total thickness of the first and second negative electrode active material layers.

Another embodiment of the present invention provides a secondary battery comprising the negative electrode for a secondary battery herein disclosed, a positive electrode and a separator.

Still another embodiment of the present invention provides a method for manufacturing the negative electrode according to the present disclosure, the method comprising:
forming a first negative electrode active material layer on a current collector;
forming a second negative electrode active material layer on the first negative electrode active material layer, and
exposing the first and second negative electrode active material layers to a magnetic field during the forming a first negative electrode active material layer on a current collector and the forming a second negative electrode active material layer on the first negative electrode active material layer;
wherein the first and second negative electrode active material layers comprise a silicon-based active material and natural graphite, and the natural graphite has an average particle diameter (D50) of 10 µm or less, and
the OI (004/110) of the first and second negative electrode active material layers is 8 or less.

In embodiments described in the present specification the weight loading ratio of the second negative electrode active material layer is 20% to 35% relative to the weight loading ratio of the first and second negative electrode active material layers.

Yet another embodiment of the present invention refers to a slurry composition for manufacturing the negative electrode for a secondary battery according to the embodiments of the invention, said slurry composition comprising a silicon-based active material and natural graphite, the natural graphite having an average particle diameter (D50) of 10 µm or less.

According to embodiments described in the present specification, by including a silicon-based active material and natural graphite in a two-layered negative electrode active material layer, and by controlling the graphite orientation degree of the negative electrode active material layer and simultaneously, improving the particle diameter of the natural graphite, quick charging performance can be maximized.

Specifically, compared to forming the negative electrode active material layer as a single layer, when forming the negative electrode active material layer as a two-layer structure, the lithium ion penetration and diffusion rates can be improved by forming the thickness of each layer thinner than a single layer. Also, the two-layer structure can improve battery characteristics by configuring the materials of each layer differently as needed. The durability, or lifespan, of the battery can be improved after magnetic alignment in a two-layer structure compared to a single-layer structure.

Advantageously, further improvement is achieved by setting the weight loading ratio of the negative electrode active material layer disposed far from the current collector to a specific range, i.e. setting the weight loading ratio of the upper layer of the two negative electrode active material layers to a specific range.

Specifically, the negative electrode tortuosity and orientation degree can be reduced through the magnetic alignment of the graphite in the negative electrode, in order to allow lithium to migrate smoothly in the negative electrode. Simultaneously, the co-use of natural graphite with a small particle diameter can shorten the lithium diffusion distance in the particles, resulting in quicker charging.

In addition, by using natural graphite with a small particle size, and advantageously by simultaneously adjusting the weight loading ratio of the upper layer (second negative electrode active material layer) in the negative electrode active material layers to 20% to 35%, for example to 22% to 33%, or 35% to 30%, relative to the weight loading ratio of the first and second negative electrode active material layers, lithium can be allowed to quickly migrate from the upper layer (second negative electrode active material layer) to the inside of the negative electrode active material layer, thereby improving further the quick charging performance of the negative electrode.

### DETAILED DESCRIPTION

Hereinafter, the present invention will be described in more detail in order to help the understanding of the present invention. The present invention can be implemented in various different forms, and is not limited to the embodiments described herein. In this case, terms or words used in the specification and the claims should not be interpreted as being limited to typical or dictionary meanings and should be interpreted with a meaning and a concept that are consistent with the technical spirit of the present invention based on the principle that an inventor can appropriately define a concept of a term in order to describe his/her own invention in the best way.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

When the term "about" is used, it may be referred to a value which may vary for example, ±10% of defined value, ±5% of the defined value, ±1% of the defined value, or ±0.1% of the defined value.

A case where a part such as a layer is present "above" or "on" another part includes a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

When referring to the "upper layer", or to the "upper negative electrode active material layer", it is to be understood that the "upper layer" is the layer disposed farther from the current collector, meaning that the upper layer is the second negative electrode active material layer which is disposed onto the first negative electrode active material layer, being said first negative electrode active material layer disposed onto the current collector. In an analogous manner, when referring to the "lower layer", or to the "lower negative electrode active material layer", it is to be understood that the "upper layer" is the layer disposed closer from the current collector, meaning that the lower layer is the first negative electrode active material layer which is disposed onto the current collector.

In the present specification, particle diameter means the average particle diameter represented by D50. D50 may be defined as the particle size based on 50% of the particle size distribution and may be measured using the laser diffraction method. For example, in the method for measuring the average particle diameter (D50), after the particles of the electrode are dispersed in a dispersion medium, the resulting dispersion is introduced into a commercially available laser diffraction particle size measuring device (for example, Microtrac MT3000) and irradiated with an ultrasonic wave with 28 kHz at an output of 60 W, and then, the average particle diameter (D50) corresponding to 50% of the volume cumulative amount in a measuring device may be calculated.

In the present specification, the description that refers to the "active material layer" without the expression of the first and second may be applied to both the first and second active material layers.

The negative electrode for a secondary battery according to an embodiment of the present specification includes: a current collector; a first negative electrode active material layer provided on the current collector; and a second negative electrode active material layer provided on the first negative electrode active material layer, in which the first and second negative electrode active material layers include a silicon-based active material and natural graphite, the natural graphite has an average particle diameter (D50) of 10 µm or less, the OI (004/110) of the first and second negative electrode active material layers is 8 or less. In other words, the negative electrode for a secondary battery may allow lithium in the negative electrode to more actively migrate, and thus may improve the quick charging performance of the negative electrode by formation of a two-layered negative electrode active material layer, and simultaneously, using a natural graphite with a small particle diameter and adjusting the graphite orientation of the negative electrode active material to the above range. When the OI (004/110) of the first and second negative electrode active material layers is 8 or less, the internal structure of the negative electrode active material layer is randomized, and the degree of disorder increases, making lithium ion movement and diffusion faster and easier, which is advantageous for quick rapid charging performance.
The OI (004/110) of the first and second negative electrode active material layers may be 8 or less, 7 or less, or 6 or less, between 1 and 8, or between 2 and 7, or between 3 and 6, and also advantageously, by controlling the weight loading ratio of the upper layer relative to the upper and lower layers to 20% to 35%, for example to 22% to 33%, or 35% to 30%, relative to the weight loading ratio of the first and second negative electrode active material layers, during the formation of a two-layered negative electrode active material layer.

The OI (004/110) of the first and second negative electrode active material layers is a value obtained through X-ray diffraction analysis, and may be obtained using JIS K 0131-1996 or using a general method of X-ray diffraction analysis, such as an X-ray diffraction analyzer Bruker D4 Endeavor. Here, OI (004/110) is measured with the first and second negative electrode active material layers provided on the current collector. The OI is a value measured for the entire first and second negative electrode active material layers. The OI measured in this way includes not only the material consisting of the negative electrode active material layer but also the properties of the negative electrode active material layer imparted by the manufacturing process including coating and rolling, so it can be distinguished from the OI value measured when the electrode material is in a powder state.
The OI value of the negative electrode may be represented by *I*₀₀₄/*I*₁₁₀, where *I*₀₀₄ represents the characteristic diffraction peak area of the (004) crystal plane, and *I*₁₁₀ represents the characteristic diffraction peak area of the (110) crystal plane. The (004) crystal plane has a parallel crystal structure, and the (110) crystal plane has a perpendicular crystal structure. These characteristics indicate the degree of orientation of graphite crystals in the negative electrode active material layer. The larger the OI value, the higher the orientation of graphite, which means that the graphite is oriented more parallel to the measurement plane. In the embodiment, by adjusting the OI value to 8 or less to reduce the tortuosity and orientation degree of the negative electrode, the OI value may be controlled such that lithium ions are easily inserted into or removed from the crystal structure of graphite. The OI value may be, for example, 1 or more and 8 or less, for example, 2 or more and 7 or less, 3 or more and 6 or less, or 3 or more and 8 or less. The OI value may be measured in an electrode after manufacturing a negative electrode (after charging and discharging including a fresh negative electrode or activation process are performed).

When the weight loading ratio of the upper layer (the second negative electrode active material layer) is controlled to 20% to 35% to total weight loading amount of negative electrode active material layers (including the first and the second negative electrode active material layers), for example to 22% to 33%, or 25% to 30%, during the formation of a two-layered negative electrode active material layer in the negative electrode for a secondary battery, the thickness of the upper layer is set to 20% to 35% of the total thickness of the upper and lower layers, in order to reduce the migration distance of lithium inserted from the upper layer surface, and to enable lithium to migrate smoothly inside the lower negative electrode layer through above-described the orientation. The weight loading ratio of the second negative electrode active material layer, which is the upper layer in the negative electrode active material layers, may be 20% to 35%, for example, 25% to 35%, or 28% to 32% based on the total weight of the upper and lower layers. Since the weight loading ratio of each layer is proportional to the thickness of each layer, the weight loading ratio can be confirmed from the thickness of each layer.

According to an embodiment, the thickness of the second negative electrode active material layer may be 40% to 60%, for example, 45% to 55%, specifically 50% of the thickness of the first negative electrode active material layer.

In this specification, the boundary between the first and second negative electrode active material layers can be confirmed by measuring the electrode cross section. For example, the boundary between the two layers can be confirmed by cutting the electrode cross-section by ion milling the electrode cross-section and measuring the cross-sectioned electrode with a scanning electron microscope.

According to an embodiment, the contents of the silicon-based active material in the first negative electrode active material layer and the second negative electrode active material layer may be different.

According to an embodiment, the content of the silicon-based active material in the second negative electrode active material layer may be higher than the content of the silicon-based active material in the first negative electrode active material layer. Even when the content of the silicon-based active material in the second negative electrode active material layer is high, as described above, it is possible to prevent the energy density from becoming too low by setting the thickness or weight loading ratio of the second negative electrode active material layer to 20% or more.

According to an embodiment, the natural graphite may have an average particle diameter (D50) of 10 µm or less, or 9 µm or less, or 1 to 10 µm, or 2 µm to 9 µm, or 3 µm to 8 µm, or 4 µm to 7 µm, or 5 µm to 10 µm, or 6 µm to 9 µm. General natural graphite has an average particle diameter (D50) of more than 10 µm, but in the embodiments, the smaller the average particle diameter (D50) is of 10 *µ*m or less, the relatively shorter the diffusion distance of lithium ions, which is advantageous for improving quick charging characteristics by speeding up the penetration and diffusion of lithium ions. Specifically, the larger the particle diameter of natural graphite is, the longer is the lithium scaled distance inside the particle, making charging slower. Conversely, the smaller the particle diameter of the natural graphite is, the shorter is the lithium diffusion distance, which may advantageously act to provide a quicker charging performance. As an exemplary method for controlling the particle diameter of natural graphite, it is possible to use a method of spheroidizing natural flake graphite and coating the surface of the spheroidized natural graphite with carbon, in order to reduce the specific surface area. Natural flake graphite may be spheroidized by an air current classification method. The carbon coating treatment on the surface may be performed by disposing a precursor on the modified spherical natural graphite and subsequently proceeding to conduct a heat treatment method. The precursor may be any precursor for conducting a carbon coating treatment on the surface of natural graphite, being non-limiting examples of said precursors materials such as pitch.

According to an embodiment, the first and second negative electrode active material layers may further include artificial graphite. The artificial graphite may have an average particle diameter (D50) of 15 µm to 50 µm, for example from 20 µm to 45 µm, from 25 µm to 40 µm, from 30 µm to 35 µm. Having artificial graphite withan average particle diameter (D50) of 15 µm or more, allows evenly applying the binder to the surface of the active material, so improving the negative electrode adhesion to the current collector. In addition, having artificial graphite with an average particle diameter (D50) of 50 µm or less, by effectively controlling the size of the particle diameter of the artificial graphite and making the diffusion of lithium ions easier, allows improving the negative electrode quick charging performance.

Because artificial graphite is a granulated secondary particle, it is difficult to control the particle size below 10 *µ*m. In addition, even if the size of the granulated artificial graphite (secondary particles made by assembling primary particles) is 10 *µ*m, it does not have a good effect on the adhesion to the collector. The reason is that because the particles are small, there are more dead binders that get stuck between particles and do not function properly as an adhesive, which has a negative effect on the adhesion. In addition, the smaller the particle size of artificial graphite, the more densely the particles are located within the electrode, and the structure is more densely packed in the electrode after rolling, which is not advantageous for quick charging performance. The dense structure serves to lengthen the tortuosity within the electrode, that is, the movement distance of lithium ions, which is disadvantageous to quick charging performance.

In the present specification, the 'secondary particles' are particles formed by aggregation of primary particles (for example, more than 50 or hundreds) of primary particles generally as described herein. On the other hand, the concept of the 'primary particles' means particles having no grain boundaries in appearance when observed at a magnification of 5,000 times to 20,000 times using a scanning electron microscope.

In the present specification, the 'particles' may be meant to include any one or all of secondary particles and primary particles.

According to an embodiment, each of the first and second negative electrode active material layers may include natural graphite in an amount of 10 parts by weight to 50 parts by weight, such as 15 parts by weight to 45 parts by weight, 20 parts by weight to 40 parts by weight, based on 100 parts by weight of the negative electrode active material.

According to an embodiment, each of the first and second negative electrode active material layers may include artificial graphite in an amount of 50 parts by weight to 89parts by weight, such as 52 parts by weight to 85 parts by weight, 55 parts by weight to 80 parts by weight, 58 parts by weight to 72 parts by weight, based on 100 parts by weight of the negative electrode active material. When the content of artificial graphite is higher than the content of natural graphite, the quick charging performance may improve.

According to one embodiment, the content of natural graphite in the second negative electrode active material layer is lower than the content of natural graphite in the first negative electrode active material layer. For example, the content of natural graphite in the second negative electrode active material layer is 25 to 35 parts by weight based on 100 parts by weight of graphite in the second negative electrode active material layer, and the content of natural graphite in the first negative electrode active material layer is 35 to 45 parts by weight based on 100 parts by weight of graphite in the first negative electrode active material layer. Artificial graphite is advantageous in improving quick charging performance compared to natural graphite. Meanwhile, natural graphite has a larger capacity than artificial graphite, which can increase energy density and increase adhesion to the negative electrode current collector. Therefore, in a single-layer structure, it is difficult to simultaneously secure the quick charging performance by artificial graphite and the high energy density and adhesion effect to the current collector by natural graphite, whereas in the two-layer structure of the present invention, by relatively increasing the content of natural graphite in the first negative electrode active material layer disposed close to the current collector and relatively increasing the content of artificial graphite in the second negative electrode active material layer, quick charging performance, energy density, and adhesion to the current collector are all improved.

In an embodiment of the present specification, the silicon-based active material includes at least one of SiOx (0≤x<2), SiMy (M is a metal, 1≤y≤4), and Si/C. Only one type of the silicon-based active material may be included, or two or more types may be included together. When each of the layers of the negative electrode active material layer include a silicon-based active material, each of the layers may include the same type of silicon-based active material, or different types or combinations of silicon-based active materials.

In an embodiment of the present specification, the silicon-based active material may be included in an amount of 1 part by weight to 40 parts by weight, such as, 5 part by weight to 30 part by weight, or 10 part by weight to 20 parts by weight, based on the total 100 parts by weight of the active materials included in the negative electrode active material layer including the silicon-based active material. The silicon-based active material in the first and second negative electrode active material layers may be included in the same amount or may be included in different amounts.

The silicon-based active material containing SiOₓ (0≤x<2) may be a silicon-based composite particle including SiOₓ (0<x<2) and pores.

According to the present disclosure, the term composite particle, when referred to particles of a silicon-based active material, refers to particles comprising a silicon-based active material, optionally other elements or compounds, and pores. According to the present disclosure, a composite refers to two or more materials which are physically aggregated but not chemically bonded.

The silicon-based composite particle comprise a SiOₓ (0<x<2) matrix including Si and SiO₂, wherein the Si may also form a separate phase inside the SiOₓ matrix. That is, the x corresponds to the number ratio of O for Si included in the SiOₓ (0<x<2). Having a silicon-based active material containing SiOₓ (0≤x<2) may improve the discharge capacity of a secondary battery.

The silicon-based composite particles may further include at least one of a Mg compound and a Li compound. The Mg compound and Li compound may be included into a matrix in the silicon-based composite particle.

The Mg compound and/or Li compound may be dispersed inside and/or on the surface of the SiOₓ (0<x<2). The initial efficiency of the battery may be improved by the Mg compound and/or Li compound.

The Mg compound may include at least any one selected from the group consisting of Mg silicates, Mg silicides and Mg oxides. The Mg silicate may include at least any one selected from the group consisting of Mg₂SiO₄ and MgSiO₃. The Mg silicide may include Mg₂Si. The Mg oxide may include MgO.

In an embodiment of the present specification, the Mg element may be included in an amount of 0.1 wt% to 20 wt%, or 0.1 wt% to 10 wt% based on total 100 wt% of the silicon-based active material. Specifically, the Mg element may be included in an amount of 0.1 wt% to 20 wt%, 0.2 wt% to 15 wt%, 0.3 wt% to 10 wt%, 0.4 wt% to 9 wt%,0.5 wt% to 8 wt%, 0.6 wt% to 7 wt%, 0.7 wt% to 6 wt%, 0.8 wt% to 5 wt%, or 0.8 wt% to 4 wt%. Having an amount of the Mg element satisfying the above range, results in that the content of the Mg compound included in the silicon-based active material is appropriate so that the volume change of the silicon-based active material during the charging and discharging of a battery may be readily suppressed, and so that the discharge capacity and initial efficiency of the battery may be improved.

The Li compound may include at least any one selected from the group consisting of Li silicates, Li silicides and Li oxides. The Li silicate may include at least any one selected from the group consisting of Li₂SiO₃, Li₄SiO₄ and Li₂Si₂O₅. The Li silicide may include Li₇Si₂. The Li oxide may include Li₂O.

In an embodiment of the present invention, the Li compound may be present in the form of a lithium silicate. The lithium silicate is represented by the formula LiₐSi_{b}O_{c} (2≤a≤4, 0<b≤2, 2≤c≤5) and may be classified into crystalline lithium silicate and amorphous lithium silicate. The crystalline lithium silicate in the silicon-based composite particles may be present in the form of at least one lithium silicate selected from the group consisting of Li₂SiO₃, Li₄SiO₄ and Li₂Si₂O₅, and the amorphous lithium silicate may be in the form of LiₐSi_{b}O_{c} (2≤a≤4, 0<b≤2, 2≤c≤5).

In an embodiment of the present specification, the Li element may be included in an amount of 0.1 wt% to 20 wt%, or 0.1 wt% to 10 wt% based on total 100 wt% of the silicon-based active material. Specifically, the Li element may be included in an amount of 0.1 wt% to 20 wt%, 0.2 wt% to 15 wt%, 0.3 wt% to 10 wt%, 0.4 wt% to 9 wt%, 0.5 wt% to 8 wt%, 0.6 wt% to 7 wt%, 0.7 wt% to 6 wt%, 0.8 wt% to 5 wt%, more specifically 0.5 wt% to 4 wt%. Having an amount of the Li element satisfying the above range results in that the content of the Li compound included in the silicon-based active material is appropriate, so that the volume change of the negative electrode active material during the charging and discharging of a battery may be readily suppressed, and so that the discharge capacity and initial efficiency of the battery may be improved.

The content of the Mg element or the content of the Li element may be confirmed by ICP (Inductively Coupled Plasma) analysis. For the ICP analysis a sample of the negative active material is obtained by aliquoting a predetermined amount (for example 0.01 g) of the negative electrode active material, subsequently the negative electrode active material is decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid of a known concentration prepared using a standard solution of the Mg compound and the Li compound (5 mg/kg) in an intrinsic wavelength of the Mg element or Li element using an inductively coupled plasma atomic emission spectrometer (ICPAES, Perkin-Elmer 7300). Thereafter, the previously pre-treated sample solution and a blank sample are each introduced into the apparatus, an actual intensity is calculated by measuring each intensity, the concentration of each component relative to the prepared calibration curve is calculated, and then the contents of the Mg element or the Li element of the prepared silicon-based active material may be analyzed by converting the total sum so as to be the theoretical value.

In an embodiment of the present specification, a carbon coating layer may be provided on the surface of the silicon-based composite particles and/or inside pores. The carbon coating layer herein disclosed, imparts electrical conductivity to the silicon-based composite particles, and the initial efficiency, service life characteristics, and battery capacity characteristics of a secondary battery including the negative electrode active material including the silicon-based composite particles may be improved, providing accordingly, a more sustainable secondary battery. The total weight of the carbon coating layer may be included in an amount of 5 wt% to 40 wt%, 10 wt% to 30 wt%, 15 wt% to 20 wt%, based on total 100 wt% of the silicon-based composite particles.

In an embodiment of the present specification, the carbon coating layer may include at least any one of amorphous carbon and crystalline carbon.

The silicon-based active material may have an average particle diameter (D₅₀) of 2 µm to 15 µm, specifically 3 µm to 12 µm, and more specifically 4 µm to 10 µm. When the silicon-based composite particles have an average particle diameter (D₅₀) satisfying the above range, side reactions between the silicon-based composite particles and an electrolyte solution of the secondary battery may be controlled, and the discharge capacity and initial efficiency of the battery may be effectively implemented.

In the present specification, an average particle diameter (D₅₀) may be defined as a particle diameter corresponding to 50% of a cumulative volume in a particle diameter distribution curve of the particles. The average particle diameter (D₅₀) may be measured using, for example, a laser diffraction method. The laser diffraction method can generally measure a particle diameter of about several mm from the submicron region, and results with high reproducibility and high resolution may be obtained.

The active material including Si/C as the silicon-based active material is a composite of Si and C, and is to be distinguished from silicon carbide denoted as SiC. The silicon carbon composite may be a composite of silicon, graphite, and may also form a structure in which a core of silicon and graphite composite and the like is surrounded by graphene, amorphous carbon. In the silicon carbon composite, the silicon may be nano-silicon, which is a nano-sized particle of silicon dispersed in the silicon carbon composite.

In some embodiments, the negative electrode active material layer may comprise other ingredients or compounds, such as a binder or a conductive material, in addition to the negative active materials. In an embodiment of the present specification, the negative electrode active material in 100 parts by weight of each of the negative electrode active material layers may be included in an amount of 80 parts by weight or more and 99.9 parts by weight or less, for example from 80 parts by weight to 98 parts by weight, from 85 parts by weight to 95 parts by weight, preferably 90 parts by weight or more and 99.9 parts by weight or less, and more preferably 95 parts by weight or more and 99.9 parts by weight or less.

According to an additional embodiment of the present specification, the negative electrode active material layer may further include a negative electrode binder in addition to the silicon-based active material and the carbon-based active material.

The negative electrode binder may serve to improve the bonding between negative electrode active material particles and the adhesion between the negative electrode active material particles and the negative electrode current collector. As the negative electrode binder, those known in the art may be used, and non-limiting examples thereof may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder may be included in an amount of 0.1 parts by weight or more and 20 parts by weight or less, 0.2 parts by weight or more or 18 parts by weight or less, 0.3 parts by weight or more or 16 parts by weight or less, 0.4 parts by weight or more or 14 parts by weight or less, 0.5 parts by weight or more or 12 parts by weight or less, 0.6 parts by weight or more or 10 parts by weight or less, for example, preferably 0.3 parts by weight or more and 20 parts by weight or less, and more preferably 0.5 parts by weight or more and 10 parts by weight or less, based on 100 parts by weight of the negative electrode active material layer.

The negative electrode active material layer may not include a conductive material, but may further include a conductive material, if necessary. The conductive material included in the negative electrode active material layer is not particularly limited as long as the conductive material has electrical conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a fluorocarbon powder, an aluminum powder, and a nickel powder; a conductive whisker such as zinc oxide and potassium titanate; a conductive metal oxide such as titanium oxide; a conductive material such as polyphenylene derivatives, and the like. The content of the conductive material in the negative electrode active material layer may be 0.01 parts by weight to 20 parts by weight, 0.05 parts by weight to 18 parts by weight, 0.10 parts by weight to 16 parts by weight, 0.50 parts by weight to 14 parts by weight, 1.50 parts by weight to 12 parts by weight, 3 parts by weight to 10 parts by weight, 5 parts by weight to 8 parts by weight, preferably 0.03 parts by weight to 18 parts by weight, based on 100 parts by weight of the negative electrode active material layer. For the purposes of the present disclosure, when the carbon-based active material is graphite, such as natural graphite or artificial graphite, the parts by weight of the graphite used as carbon-based active material are not to be taken into consideration when defining the total parts by weight of conductive material. In an analogous manner, when the conductive material selected according for the negative electrode is graphite, the parts by weight of conductive material described are not to be included when defining the total parts by weight of carbon-based negative electrode active material. Accordingly, when graphite is selected both as carbon-based negative electrode active material and as negative electrode conductive material, the total parts by weight of graphite correspond to the addition of the parts by weight of graphite used as carbon-based negative electrode active material and of the parts by weight of graphite used as negative electrode conductive material.

The conductive material included in the negative electrode active material layer is, for example, carbon black such as acetylene black, Ketjen black, channel black, furnace black, lamp black, and thermal black; a conductive fiber such as carbon fiber or metal fiber; a conductive tube such as a carbon nanotube.

In an embodiment of the present specification, the first negative electrode active material layers may have a thickness of 1 µm or more and 50 µm or less, for example, 2 µm or more and 40 µm or less, 5 µm or more and 30 µm or less, 10 µm or more and 25 µm or less; whereas the second negative electrode active material layers may have a thickness of 5 µm or more and 100 µm or less, for example, 10 µm or more and 80 µm or less, 20 µm or more and 60 µm or less, 25 µm or more and 50 µm or less. The sum of the thicknesses of the first and second negative electrode active material layers may be 6 µm or more and 150 µm or less, 50 µm or more and 140 µm or less, 80 µm or more and 120 µm or less.

In an embodiment of the present application, the negative electrode current collector is sufficient as long as the negative electrode current collector has electrical conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 1 µm to 50 µm, for example 2 µm to 40 µm, 5 µm to 30 µm, 10 µm to 20 µm, the thickness of the current collector is not limited thereto.

An additional embodiment of the present specification provides a secondary battery including the positive electrode, the negative electrode, and the separator according to the above-described embodiment.

In an embodiment of the present specification, the positive electrode includes a positive electrode current collector and a positive electrode active material layer formed on the positive electrode current collector and including the positive electrode active material. The positive electrode active material layer may have a thickness of 20 µm or more and 500 µm or less, 30 µm or more and 400 µm or less, 50 µm or more and 300 µm or less, 100 µm or more and 200 µm or less.

The positive electrode current collector is not particularly limited as long as the collector has electrical conductivity without causing a chemical change to a battery, and for example, it is possible to use stainless steel, aluminum, nickel, titanium, calcined carbon, or aluminum or stainless steel whose surface is treated with carbon, nickel, titanium, silver, and the like. Further, the positive electrode current collector may typically have a thickness of 1 to 50 µm, for example 2 µm to 40 µm, 5 µm to 30 µm, 10 µm to 20 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

In an embodiment of the present specification, the positive electrode may include a lithium composite transition metal compound including nickel (Ni) and cobalt (Co) as an active material. The lithium composite transition metal compound may further include at least one of manganese and aluminum. The lithium composite transition metal compound may include 80 mol% or more, for example, 80 mol% or more and less than 100 mol% of nickel referred to the total mols of nickel, cobalt and of any additional metal M of the lithium composite transition metal compound excluding lithium.

According to the present invention, the lithium composite transition metal compound comprises metals lithium (Li), nickel (Ni) and cobalt (Co) and, optionally it may also comprise one or more additional metal M. Preferably, the one or more additional metals is selected from the group consisting of Mn, Al, Ba, Ca, Zr, Ti, Mg, Ta, Nb and Mo.

In an embodiment, the positive electrode active material in 100 parts by weight of the positive electrode active material layer may be included in an amount of 80 parts by weight or more and 99.9 parts by weight or less, for example from 80 parts by weight to 98 parts by weight, from 85 parts by weight to 95 parts by weight, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an additional embodiment of the present specification, the positive electrode active material layer according to the above-described embodiment may further include a positive electrode binder and a conductive material.

The positive electrode binder may serve to improve the bonding between positive electrode active material particles and the adhesion between the positive electrode active material particles and the positive electrode current collector. As the positive electrode binder, those known in the art may be used, non-limiting examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The positive electrode binder may be included in an amount of 0.1 parts by weight or more and 20 parts by weight or less, for example, preferably 0.3 parts by weight or more and 35 parts by weight or less, and more preferably 0.5 parts by weight or more and 20 parts by weight or less, based on 100 parts by weight of the positive electrode active material layer.

The conductive material included in the positive electrode active material layer is used to impart electrical conductivity to the electrode, and can be used without particular limitation as long as the conductive material has electron conductivity without causing a chemical change in a battery. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Specifically, in an embodiment, the conductive material may include one or more of single-walled carbon nanotube (SWCNT); and multi-walled carbon nanotube (MWCNT). The conductive material may be included in an amount of 0.1 parts by weight or more and 2 parts by weight or less, for example, preferably 0.3 parts by weight or more and 1.5 parts by weight or less, and more preferably 0.5 parts by weight or more and 1.2 parts by weight or less, based on 100 parts by weight of the composition for a positive electrode active material layer.

The positive electrode and the negative electrode may be manufactured by a typical method for manufacturing a positive electrode and a negative electrode, except that the aforementioned positive electrode and negative electrode active materials are used. Specifically, after a composition for forming an active material layer, which includes the aforementioned active material and, optionally, a binder and a conductive material is applied onto current collectors, the positive electrode and negative electrode may be manufactured by drying and rolling the current collectors. In this case, the types and contents of the positive and negative electrode active materials, binders, and conductive materials are as described above. The solvent may be a solvent commonly used in the art, examples thereof include dimethyl sulfoxide (DMSO), isopropyl alcohol, N-methylpyrrolidone (NMP), acetone, water, or the like, and among them, any one thereof or a mixture of two or more thereof may be used. The amount of solvent used is sufficient as long as the solvent in the amount dissolves or disperses the active material, conductive material and binder in consideration of the application thickness and preparation yield of the slurry, and has a viscosity capable of exhibiting excellent thickness uniformity during subsequent application for manufacturing the positive electrode and the negative electrode. Alternatively, by another method, the positive electrode and the negative electrode may be manufactured by casting the composition for forming an active material layer on a separate support and then laminating a film obtained by performing peel-off from the support on a current collector.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electrical conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of F-, Cl-, I-, NO₃-, N(CN)₂-, BF₄-, ClO₄-, PF₆-, (CF₃)₂PF₄-, (CF₃)₃PF₃-, (CF₃)₄PF₂-, (CF₃)₅PF-, (CF₃)₆P-, CF₃SO₃-, CF₃CF₂SO₃-, (CF₃SO₂)₂N-, (FSO₂)₂N-, CF₃CF₂(CF₃)₂CO-, (CF₃SO₂)₂CH-, (SF₅)₃C-, (CF₃SO₂)₃C-, CF₃(CF₂)₇SO₃-, CF₃CO₂-, CH₃CO₂-, SCN- and (CF₃CF₂SO₂)₂N-.

For the purposes of improving the service life characteristics of a battery, suppressing the decrease in battery capacity, and improving the discharge capacity of the battery, thereby providing a more sustainable secondary battery, one or more additives may be further included in addition to the above electrolyte constituent components, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride.

An additional embodiment of the present invention provides a slurry composition for manufacturing the negative electrode for a secondary battery according to the above-described embodiments, said slurry composition comprising a silicon-based active material and natural graphite according to the above-described embodiments, the natural graphite having an average particle diameter (D50) of 10 µm or less, as disclosed above herein.

An additional embodiment of the present specification provides a method for manufacturing a negative electrode for a secondary battery according to the above-described embodiments, said method comprising: forming a first negative electrode active material layer on a current collector; forming a second negative electrode active material layer on the first negative electrode active material layer; and exposing the first and second negative electrode active material layers to a magnetic field during the forming a first negative electrode active material layer on a current collector and the forming a second negative electrode active material layer on the first negative electrode active material layer; wherein the first and second negative electrode active material layers include a silicon-based active material and natural graphite, the natural graphite has an average particle diameter (D50) of 10 µm or less, the OI (004/110) of the first and second negative electrode active material layers is 8 or less. Coating the first negative electrode active material layer on a current collector; and coating the second negative electrode active material layer on the first negative electrode active material layer can all be performed by applying magnetism. If necessary, coating the first and second negative electrode active material layers may each further include a drying step. That is, the first negative electrode active material layer can be coated and dried while magnetism is applied, and the second negative electrode active material layer can be coated and dried while magnetism is applied.

Advantageously, the weight loading ratio of the second negative electrode active material layer is 20% to 35% with respect to the weight loading ratio of the first and second negative electrode active material layers. Having a weight loading ratio of the second negative electrode active material layer, with respect to the weight loading ratio of the first and second negative electrode active material layers, lower than 20%, results in that the energy density may be low, and the second negative electrode active material layer may not satisfy similar grade cell specifications.

In an embodiment, the method may further include adjusting the OI to 8 or less by magnetically aligning the first and second negative electrode active material layers. The degree of alignment can be controlled by magnetic alignment intensity or time, and the stronger the intensity or the longer the exposure time, the better the magnetic alignment is and the lower the OI value is.

The secondary battery according to an embodiment of the present invention, which may be a lithium secondary battery, comprises an assembly including a positive electrode, a negative electrode, a separator and an electrolyte. The lithium secondary battery according to the present disclosure has excellent quick charging performance. For example, as illustrated by the experimental Examples described below, the 3C Li plating SOC of a lithium coin half-cell manufactured using a negative electrode according to the present invention, included in the secondary battery, may be 27% or more, preferably 28% or more, or 29% or more.

An additional embodiment of the present invention provides a battery module including the above-described secondary battery as a unit cell and a battery pack including the same. The battery module and the battery pack include the secondary battery according to the present invention, which has high capacity, high rate properties, and cycle properties, and thus, may be used as a sustainable power source of a medium-and-large sized device selected from the group consisting of an electric vehicle, a hybrid electric vehicle, a plug-in hybrid electric vehicle, and a power storage system.

Since the secondary battery according to embodiments of the present invention stably exhibits excellent discharge capacity, output characteristics, and cycle performance, the lithium secondary battery may be used as a sustainable power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### Example 1

A copper foil having a thickness of 15 µm was coated with a composition for forming a first negative electrode active material layer, including artificial graphite having a D50 of 21 µm, SiO and natural graphite having a D50 of 9 µm as a negative electrode active material, and then dried to form a first negative electrode active material layer. The first negative electrode active material layer was coated with a composition for forming a second negative electrode active material layer, including artificial graphite having a D50 of 21 µm, SiO and natural graphite having a D50 of 9 µm as a negative electrode active material , and then dried to form a second negative electrode active material layer, thereby manufacturing a negative electrode. During the coating of the compositions for forming the first and second negative electrode active material layers, the composition was subjected to magnetic equipment, and in this case, magnetic orientation was performed by a method of controlling magnet strength and total exposure time.

The compositions for forming the first and second negative electrode active material layers were prepared by mixing the above-described negative electrode active material, Super C65 as a conductive material, styrene butadiene rubber (SBR) as a binder, and carboxymethylcellulose (CMC), which is a thickener at a weight ratio of 96 (artificial graphite/natural graphite/SiO 60/39/1):1:2:1 (first negative electrode active material layer) and 96 (artificial graphite/natural graphite/SiO 70/29/1):1:2:1 (second negative electrode active material layer), and adding water thereto.

The loading amount of the composition for forming the second negative electrode active material layer was set to 30 wt% relative to the total amount of the compositions for forming the first and second negative electrode active material layers, and the OI of the prepared first and second negative electrode active material layers was 6.

Vinylene carbonate was dissolved in 0.5 wt% in a mixed solution of methyl ethyl carbonate (EMC) and ethylene carbonate (EC) at a mixed volume ratio of 7 : 3, and an electrolyte solution in which LiPF₆ having a concentration of 1 M was dissolved was injected thereinto to manufacture a lithium coin half cell.

OI was measured in the following manner.

The orientation index I(004)/I(110) indicates the degree to which the crystal structures inside the negative electrode active material layer are arranged in a certain direction, can evaluate the direction in which the crystals are oriented within the negative electrode active material layer and can be measured by X-ray diffraction (XRD). More specifically, the orientation index is an area ratio ((004)/(110)) obtained by measuring the (110) and (004) planes of the negative electrode active material included in the negative electrode active material layer by XRD and integrating the peak intensities of the (110) and (004) planes.
- Target: Cu (Kα line) graphite monochromator
- Slit: Divergent slit = 1 degree, Receiving slit = 0.1 mm, Scattering slit = 1 degree
- Measurement area and step angle/measurement time:
   (110) plane: 76.5 degrees < 2θ < 78.5 degrees, 0.01 degrees / 3 seconds
   (004) plane: 53.5 degrees < 2θ < 56.0 degrees, 0.01 degrees / 3 seconds,

In the above, 2θ represents the diffraction angle.

### Example 2

An experiment was performed in the same manner as in Example 1, except that the D50 of the natural graphite included in the first and second negative electrode active materials was 7 µm. The loading amount of the composition for forming the second negative electrode active material was set to 30 wt% relative to the total amount of the compositions for forming the first and second negative electrode active materials, and the OI of the prepared first and second negative electrode active material layers was 3. By increasing the exposure time to the magnetic equipment compared to Example 1, the tortuosity and degree of orientation were reduced through graphite magnetic arrangement in the negative electrode.

### Example 3

The same procedure as Example 1 was performed except that when manufacturing the first and second anode active material layers, natural graphite with a D50 of 10 *µ*m was used instead of natural graphite with a D50 of 9 *µ*m, and the OI of the first and second anode active material layers was adjusted to 8.

### Comparative Example 1

An experiment was performed in the same manner as in Example 1, except that during the coating of the compositions for forming the first and second negative electrode active material layers, the composition was not subjected to magnetic equipment. The loading amount of the composition for forming the second negative electrode active material was adjusted to 30 wt% relative to the total amount of the compositions for forming the first and second negative electrode active materials, and the OI of the prepared first and second negative electrode active material layers was 14.

### Comparative Example 2

An experiment was performed in the same manner as in Example 1, except that a natural graphite included in the first and second negative electrode active materials having a D50 of 18 µm was used. By setting the loading amount of the composition for forming the second negative electrode active material to 30 wt% relative to the total amount of the compositions for forming the first and second negative electrode active materials and reducing the exposure time to the magnetic equipment compared to Example 1, the OI of the prepared first and second negative electrode active material layers was adjusted to 10.

### Comparative Example 3

An experiment was performed in the same manner as in Example 1, except that the loading amount of the composition for forming the second negative electrode active material was adjusted to 70 wt% relative to the total amount of the compositions for forming the first and second negative electrode active materials. By reducing the exposure time to the magnetic equipment compared to Example 1, the OI of the prepared first and second negative electrode active material layers was 10.

### Comparative Example 4

An experiment was performed in the same manner as in Example 1, except that a natural graphite included in the first and second negative electrode active materials having a D50 of 20 µm was used. By setting the loading amount of the composition for forming the second negative electrode active material to 30 wt% relative to the total amount of the compositions for forming the first and second negative electrode active materials and skipping the exposure to the magnetic equipment, the OI of the prepared first and second negative electrode active material layers was adjusted to 22.

### Comparative Example 5

The same procedure as Example 1 was performed except that when manufacturing the first negative electrode active material layer, natural graphite with a D50 of 20 *µ*m was used, the negative electrode orientation was adjusted to 24, and the second negative electrode active material layer was not formed. Due to the nature of the material in which there were many small fine particles in the particle size distribution, the electrode orientation increased after electrode rolling, resulting in an increase in OI value.

After charging and discharging the manufactured half cell 3 times at 0.1 C, quick charging performance was evaluated by a method of determining Li plating SOC (state of charge) by finding a slope change point through the differentiation of the output voltage depending on the SOC variation with respect to the capacity while charging in CC mode (3C) for 15 minutes based on the discharge capacity of the 3rd cycle at 1 C. Li plating SOC is the SOC point where lithium precipitates.

**[Table 1]**

| | 3C Li plating SOC (%) |
|---|---|
| Example 1 | 29 |
| Example 2 | 32 |
| Example 3 | 27 |
| Comparative Example 1 | 24 |
| Comparative Example 2 | 25 |
| Comparative Example 3 | 25 |
| Comparative Example 4 | 17 |
| Comparative Example 5 | 16 |

As shown in Table 1, it could be confirmed that the half cells manufactured in the Examples according to the present invention were excellent in quick charge performance compared to Comparative Examples 1 to 5.

The present disclosure also refers to the following items:
Item 1. A negative electrode for a secondary battery, comprising: a current collector;
   a first negative electrode active material layer provided on the current collector; and
   a second negative electrode active material layer provided on the first negative electrode active material layer,
   wherein the first and second negative electrode active material layers comprise a silicon-based active material and natural graphite, the natural graphite has an average particle diameter (D50) of 10 µm or less, said average particle diameter (D50) measured by laser diffraction method, and
   an OI (004/110) of the first and second negative electrode active material layers is 8 or less.
Item 2. The negative electrode of item 1, wherein the thickness of the second negative electrode active material layer is 40% to 60% of a thickness of the first negative electrode active material layer.
Item 3. The negative electrode according to any of items 1 or 2, wherein the natural graphite has an average particle diameter (D50) of 6 µm to 9 µm.
Item 4. The negative electrode according to any of items 1 to 3, wherein the first and second negative electrode active material layers further comprise artificial graphite.
Item 5. The negative electrode according to item 4, wherein the artificial graphite has an average particle diameter (D50) of 15 µm to 50 µm.
Item 6. The negative electrode according to any of items 1 to 5, wherein each of the first and second negative electrode active material layers comprises a silicon-based active material in an amount of 1 part by weight to 40 parts by weight based on 100 parts by weight of the negative electrode active material.
Item 7. The negative electrode according to any of items 1 to 6, wherein the silicon-based active material comprises at least one of SiOx, wherein 0≤x<2, SiMy (M is a metal, 1≤y≤4), and Si/C.
Item 8. The negative electrode according to any of items 1 to 7, wherein each of the first and second negative electrode active material layers comprises natural graphite in an amount of 10 parts by weight to 50 parts by weight based on total 100 parts by weight of the negative electrode active material.
Item 9. The negative electrode according to any of items 1 to 8, wherein each of the first and second negative electrode active material layers comprises artificial graphite in an amount of 50 parts by weight to 99 parts by weight based on 100 parts by weight of the negative electrode active material.
Item 10. A secondary battery comprising the negative electrode according to any one of items 1 to 9, a positive electrode, and a separator.
Item 11. The secondary battery of item 10, wherein the positive electrode comprises a lithium composite transition metal compound comprising nickel (Ni) and cobalt (Co) as an active material.
Item 12. The secondary battery of item 11, wherein the lithium composite transition metal compound further comprises at least one of manganese and aluminum.
Item 13. A method for manufacturing the negative electrode for a secondary battery according to any one of items 1 to 9, the method comprising: forming a first negative electrode active material layer on a current collector; and
   forming a second negative electrode active material layer on the first negative electrode active material layer,
   exposing the first and second negative electrode active material layers to a magnetic field during the forming a first negative electrode active material layer on a current collector and the forming a second negative electrode active material layer on the first negative electrode active material layer;
   wherein the first and second negative electrode active material layers comprise a silicon-based active material and natural graphite, the natural graphite has an average particle diameter (D50) of 10 µm or less,
   an OI (004/110) of the first and second negative electrode active material layers is 8 or less, and
   a weight loading ratio of the second negative electrode active material layer is 20% to 35% relative to a weight loading ratio of the first and second negative electrode active material layers.
Item 14. The method of item 13, further comprising adjusting the OI to 8 or less by magnetically aligning the first and second negative electrode active material layers.
Item 15. A slurry composition for manufacturing the negative electrode for a secondary battery according to any one of items 1 to 9, said slurry composition comprising a silicon-based active material and natural graphite, the natural graphite having an average particle diameter (D50) of 10 µm or less.

## Claims

1. A negative electrode for a secondary battery, comprising: a current collector;
a first negative electrode active material layer provided on the current collector; and
a second negative electrode active material layer provided on the first negative electrode active material layer,
wherein the first and second negative electrode active material layers comprise a silicon-based active material and natural graphite, the natural graphite has an average particle diameter (D50) of 10 µm or less, said average particle diameter (D50) measured by laser diffraction method, and
an OI (004/110) of the first and second negative electrode active material layers is 8 or less.

2. The negative electrode of claim 1, wherein the thickness of the second negative electrode active material layer is 20% to 35% relative to the total thickness of the first and second negative electrode active material layers.

3. The negative electrode of claim 1, wherein the thickness of the second negative electrode active material layer is 40% to 60% of a thickness of the first negative electrode active material layer.

4. The negative electrode according to claim 1, wherein the natural graphite has an average particle diameter (D50) of 6 µm to 9 µm.

5. The negative electrode according to claim 1, wherein the first and second negative electrode active material layers further comprise artificial graphite.

6. The negative electrode according to claim 5, wherein the artificial graphite has an average particle diameter (D50) of 15 µm to 50 µm.

7. The negative electrode according to claim 1, wherein each of the first and second negative electrode active material layers comprises a silicon-based active material in an amount of 1 part by weight to 40 parts by weight based on 100 parts by weight of the negative electrode active material.

8. The negative electrode according to claim 1, wherein the silicon-based active material comprises at least one of SiOx, wherein 0≤x<2, SiMy (M is a metal, 1≤y≤4), and Si/C.

9. The negative electrode according to claim 1, wherein each of the first and second negative electrode active material layers comprises natural graphite in an amount of 10 parts by weight to 50 parts by weight based on total 100 parts by weight of the negative electrode active material.

10. The negative electrode according to claim 1, wherein each of the first and second negative electrode active material layers comprises artificial graphite in an amount of 50 parts by weight to 99 parts by weight based on 100 parts by weight of the negative electrode active material.

11. A secondary battery comprising the negative electrode according to any one of claims 1 to 10, a positive electrode, and a separator.

12. The secondary battery of claim 11, wherein the positive electrode comprises a lithium composite transition metal compound comprising nickel (Ni) and cobalt (Co) as an active material.

13. The secondary battery of claim 12, wherein the lithium composite transition metal compound further comprises at least one of manganese and aluminum.

14. A method for manufacturing the negative electrode for a secondary battery according to any one of claims 1 to 10, the method comprising: forming a first negative electrode active material layer on a current collector; and
forming a second negative electrode active material layer on the first negative electrode active material layer,
exposing the first and second negative electrode active material layers to a magnetic field during the forming a first negative electrode active material layer on a current collector and the forming a second negative electrode active material layer on the first negative electrode active material layer;
wherein the first and second negative electrode active material layers comprise a silicon-based active material and natural graphite, the natural graphite has an average particle diameter (D50) of 10 µm or less,
an OI (004/110) of the first and second negative electrode active material layers is 8 or less.

15. The method for manufacturing the negative electrode for a secondary battery according to claim 14, a weight loading ratio of the second negative electrode active material layer is 20% to 35% relative to a weight loading ratio of the first and second negative electrode active material layers.
